Europäisches Patentamt

European Patent Office

Office européen des brevets

(11) Publication number: **0 267 165**
**A2**

# (12) EUROPEAN PATENT APPLICATION

(21) Application number: **87830390.8**

(22) Date of filing: **05.11.87**

(51) Int. Cl.⁴: **B 29 C 43/24**
**B 21 B 31/20**

(30) Priority: **06.11.86 IT 2225486**

(43) Date of publication of application:
**11.05.88 Bulletin 88/19**

(84) Designated Contracting States: **DE FR GB**

(71) Applicant: **COMERIO ERCOLE S.p.A.**
**Via Silvio Pellico, 3**
**Busto Arsizio (IT)**

(72) Inventor: **Lualdi, Renato**
**Via Mazzini, 16**
**Busto Arsizio (Varese) (IT)**

(74) Representative: **Caregaro, Silvio et al**
**c/o Società Italiana Brevetti S.p.A. Via Carducci 8**
**I-20123 Milano (IT)**

(54) **Unit for controlling the gap between the rolls of a calender for rubber or generally plastic materials.**

(57) A unit for controlling the gap between calender rolls includes an adjusting screw for varying the gap between the calender rolls upon rotation of the screw. A fine-adjustment means is mounted between this screw and the bearing box of the calender rolls so that the gap between the rolls can be adjusted in small increments without the necessity of rotating the screw.

The fine-adjusting means includes a hydraulic cylinder connected to the screw, and a piston movable within the cylinder and having an end portion connected to a bearing box of the calender rolls. The position of the piston is adjusted hydraulically for providing fine-adjustments of the gap between the calender rolls.

Fig.1

EP 0 267 165 A2

**Description**

## "UNIT FOR CONTROLLING THE GAP BETWEEN THE ROLLS OF A CALENDER FOR RUBBER OR GENERALLY PLASTIC MATERIALS"

The present invention relates to a unit for enabling the gap between calender rolls to be adjusted within narrow limits by hydraulic means, instead of the normal screw adjustment traditionally associated with units for controlling the gap between calender rolls.

Calender rolls are used in many applications for forming thin films of various polymeric materials, and traditionally the gap between the calender rolls is adjusted by a screw element connected to the bearing housing for one of the rolls. In this way, rotation of the screw serves to position the housing, and normally the thickness of the film material being produced by the calender rolls is monitored by appropriate feedback devices to rotate the screw incrementally to provide fine adjustment of the gap between the calender rolls.

Unfortunately, however, the screw is often rotated within fairly narrow limits quite rapidly, and this frequent rotation of the screw in opposite directions often results in wear of the screw thread. In particular this happens using systems for process controlling and product optimization. In fact these systems provide the continuous thickness controlling of the material produced by the calender and therefore they produce very frequent correction signals (3, 4 signals per minute).

Consequently, after extended use the threads of the screw become unacceptably worn and the screw cannot be used for precise and fine adjustments of the gap between the calender rolls, and must be replaced.

It is, therefore, an object of the present invention to provide a fine adjustment for a unit controlling the gap between calender rolls which does not require rapid rotation of the screw elements through narrow limits and, consequently, does not unduly wear the screw. In this way, the normal life of the screw used in controlling the gap between calender rolls can be extended.

According to the present invention, a unit for controlling the gap between calender rolls includes an adjusting screw for varying the gap between the calender rolls upon rotation of the screw in a known manner, and additionally a fine-adjusting means is mounted between the screw and the bearing box for one of the calender rolls. This fine-adjusting means includes a hydraulic cylinder connected to the screw and having a piston moveable therein. The piston has one portion connected to the bearing box for one of the calender rolls, and means responsive to the gap between the calender rolls are provided for hydraulically varying the position of the piston within the cylinder to control the calender gap.

Additionally, in the preferred embodiment of the present invention, the cylinder for the piston has a length exceeding the expected stroke of the piston during normal fine-adjusting operation.

In this way, the piston may move in the portion of the cylinder adjacent to the bearing box for normal adjusting operations, and the piston may also be moved to extremes in the opposite end portion of this cylinder to increase the gap between the calender roll beyond the normal limits expected for fine adjustments.

In this way, the hydraulic fine-adjusting means can serve to rapidly increase the gap between the calender rolls when needed, for example, during emergencies when electrical power is disrupted to the calender installation.

The fine adjustment means can thus serve to separate the calender rolls rapidly during emergency situations even when power to the adjusting screw is ended.

These and other objects, features and advantages of the present invention will become apparent from the description below of a preferred embodiment, wherein:

FIGURE 1 is a schematic illustration of one unit for adjusting the gap in a calender installation;

FIGURE 2 is a schematic illustration indicating the normal operating position of the piston within the hydraulic cylinder;

FIGURE 3 is a schematic illustration indicating the position of the piston within the hydraulic cylinder when the gap between the rolls is made exceedingly small;

FIGURE 4 is a schematic illustration indicating the position of the piston within the hydraulic cylinder for the normal limit of the maximum gap between the rolls provided by the fine-adjusting means; and

FIGURE 5 is a schematic illustration showing the fully retracted position of the piston of the fine-adjusting means.

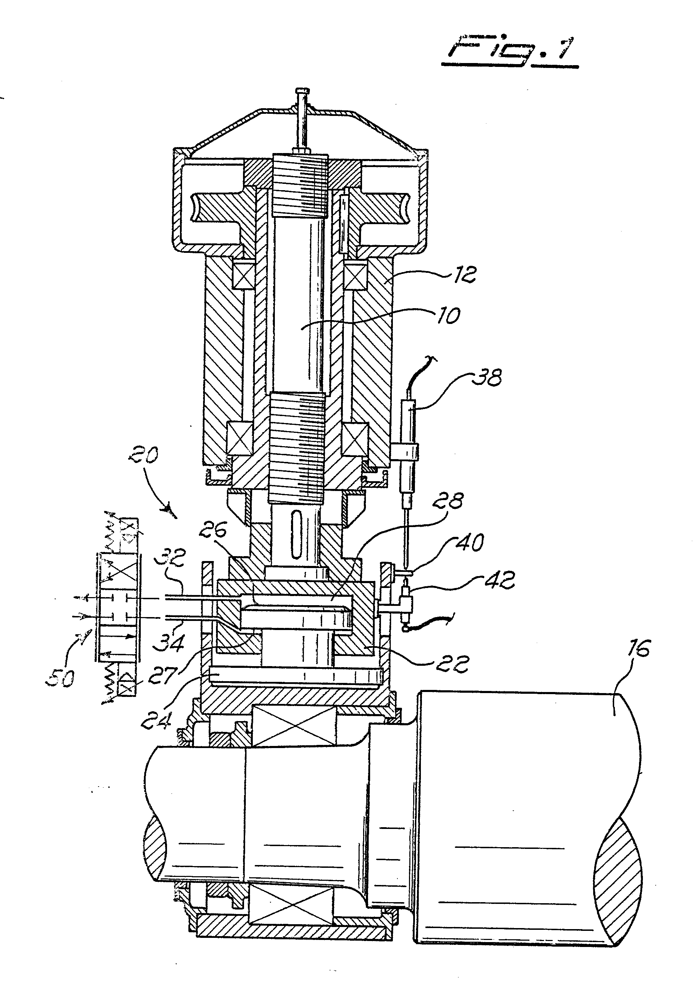

A preferred embodiment of the present invention is illustrated schematically in Fig. 1 where an adjusting screw 10 is mounted rotatably in an end frame 12 of a calender installation. The adjusting screw is mounted in a known manner, and is controlled by conventional electro-mechanical means to affect large movement of the bearing box 14 for calender roll 16.

Connected between the adjusting screw 10 and the bearing box 14 for the calender roll is a fine-adjusting means 20 constituted by a hydraulic cylinder 22 connected for direct axial movement with an end portion of the adjusting screw 10. Positioned within the hydraulic cylinder 22 is a moveable hydraulic piston 24 fixed to the bearing box 14 of the calender roll 16.

The piston 24 includes opposite piston faces 26 and 27 positioned in respective pressure chambers 28 and 30 of the hydraulic cylinder 22. The pressure chambers 28 and 30 are connected to respective conduits 32 and 34 leading to a servovalve 50 controlling the pressure within chambers 28 and 30.

Accordingly, by appropriate actuation of the servovalve 50 either manually or by conventional hydraulic control techniques, the pressure within chambers 28 and 30 can be varied to alter the position of piston 24 within the hydraulic cylinder 22. In this way, therefore, the servovalve 50 can be used to adjust the position of piston 24 and thereby provide fine-adjust ments for the vertical movements of the bearing housing 14 connected to the roll 16 without the need for any rotation of the adjusting screw 10 to provide such fine-adjustments.

Connected to the end frame 12 of the calender installation is a position transducer 38 contacting a ledge portion 40 of the bearing box 14 of the calender roll. In this way, the position transducer 38 provides electronic signals corresponding to the position of the bearing box 14 of the calender roll 16 relative the calender end frame 12.

Additionally, a position transducer 42 is provided between the ledge 40 of the bearing box 14 and the hydraulic cylinder 22 in order to provide electronic signals corresponding to the position of the bearing box 14 and the hydraulic cylinder 22.

In this way, by suitable processing of the signals from the position transducers 38 and 42, the servovalve 50 can be controlled and monitored to adjust the position of the hydraulic piston 24 within the hydraulic cylinder 22 in order to provide fine adjustments of the gap between the calender rolls, as needed.

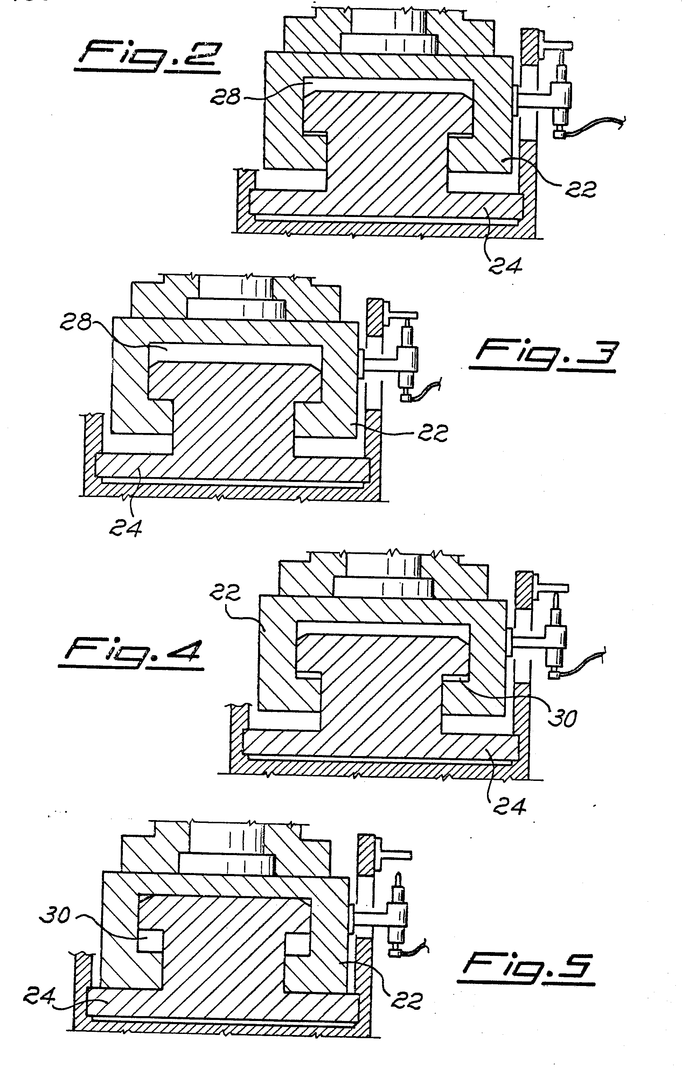

Illustrated in Figs. 2 to 5 are schematic illustrations showing different operating positions of the hydraulic piston 24 in the hydraulic cylinder 22. In the preferred embodiment of the present invention, the fine-adjusting means 20 is intended to operate within normal ranges of +1 or -1 mm to provide fine-adjustment of the gap between the calender rolls, and as illustrated in Fig. 2, the cavity 28 of the hydraulic cylinder 22 has a length which far exceeds the range of movement of the piston during the normal adjustment for the gap between the calender rolls.

As illustrated in Fig. 3, the cavity 28 has a length which exceeds the height of the piston by approximately 8 mm. During normal operation shown in Fig. 2 with the piston 24 at its "zero" position, the piston is located in the end of the hydraulic cylinder adjacent the bearing block 14, with a clearance of approximately 7 mm in the pressure chamber 28 and a clearance of approximately 1 mm in the pressure chamber 30. In this way, the hydraulic piston can be moved downward through a range of 1 mm in the position illustrated in Fig. 3; or the hydraulic piston can normally be moved upwardly through a range of 1 mm to the position illustrated in Fig. 4. Figs. 3 and 4, therefore, illustrate the normal range of operation of the fine-adjusting means 20.

As illustrated in Fig. 5, hwever, the hydraulic piston 24 may be moved upwardly to the extreme position of the cavity 28 to increase the calender gap by a full 8 mm. In this way, the hydraulic fine-adjusting means 20 can be adjusted rapidly by the servovalve 50 to greatly expand the gap between the rolls beyond the normal range of motion of the fine-adjusting means 20.

The servovalve 50 may be controlled either manually or automatically to rapidly increase the gap between the calender rolls during such emergency situations as when electric power to the adjusting screw is interrupted. The fine-adjusting means 20 operated hydraulically enables the gap between the calender rolls to be rapidly increased even during emergency electrical interruption that would prevent normal operation of the adjusting screw 10.

Accordingly, the fine-adjusting means 20 of the present invention enables the gap between the calender rolls to be adjusted through fine increments without the necessity for rapid rotation of the adjusting screw 10. In this way, the life of the adjusting screw can be greatly extended.

Additionally, the fine-adjusting means 20 enable the gap between the calender rolls to be increased rapidly under hydraulic control and, in this way, the calender gap can be increased in emergency situations relatively rapidly, even in the event of electrical interruption or failures.

Furthermore, the use of the hydraulic cylinder having pressure chamber 28 and 30 provides a pre-loading between the bearing box 14 and the end frame 12 of the calender installation, and in this way the pre-loading structures normally required in such calenders can be eliminated with attendant savings in cost and space.

These and other important features of the present invention may be employed in forms other than those described for the preferred embodiment disclosed herein, and yet still incorporating the scope of the present invention to which changes and/or modifications can be made without departing from the scope of this invention.

**Claims**

1. Unit for controlling the gap between calender rolls, comprising an adjusting screw for varying the gap between the calender rolls upon rotation of the screw, characterized by the fact that it includes a fine-adjusting means mounted between said screw and the bearing box for one of said calender rolls, said fine-adjusting means including a hydraulic cylinder connected to said screw, a piston moveable within said cylinder and having an end portion connected to said bearing box, and means responsive to the gap between the calender rolls for hydraulically varying the position of said piston within said cylinder to control the calender gap.

2. Unit according to claim 1, characterized by the fact that the cylinder of said piston having a length exceeding the expected stroke of said piston during normal adjusting operations whereby said piston may normally move in the portion of said cylinder adjacent to said bearing box for normal adjusting operations and may be moved to the opposite end of said cylinder in order to increase the gap between said calender rolls beyond said normal adjusting operations.

0267165

Fig.1

0267165

Fig.2

Fig.3

Fig.4

Fig.5